Europäisches Patentamt

European Patent Office

Office européen des brevets

(11) Publication number: **0 352 876 B1**

# EUROPEAN PATENT SPECIFICATION

(45) Date of publication of patent specification: **23.06.93** (51) Int. Cl.⁵: **A23L 1/16**

(21) Application number: **89301997.6**

(22) Date of filing: **28.02.89**

(54) **Process for preparing a fast-cooking pasta product.**

(30) Priority: **28.07.88 US 225211**

(43) Date of publication of application:
**31.01.90 Bulletin 90/05**

(45) Publication of the grant of the patent:
**23.06.93 Bulletin 93/25**

(84) Designated Contracting States:
**AT BE CH DE ES FR GB GR IT LI LU NL SE**

(56) References cited:
**EP-A- 0 267 368
FR-A- 2 406 961
GB-A- 2 071 479
US-A- 3 484 251
US-A- 4 423 082**

**Feillet P., 1977, Ann. Nutr. Diet., 12, 299**

(73) Proprietor: **Borden, Inc.
180 East Broad Street
Columbus Ohio 43215(US)**

(72) Inventor: **Chawan, Dhyaneshwar Bhujangarao
7576 Fitzpatrick Drive
Liverpool New York(US)**
Inventor: **Merritt, Carleton George
1350 River Road
Phoenix New York(US)**
Inventor: **Matuszak, Edward Albert
4225 Balboa Drive
Liverpool New York(US)**

(74) Representative: **Wilkinson, Stephen John et al
Stevens, Hewlett & Perkins 1 St. Augustine's
Place
Bristol BS1 4UD (GB)**

EP 0 352 876 B1

**Description**

FIELD OF THE INVENTION

This invention is directed to a process for preparing a pasta product which is capable of cooking in less than about two minutes. Specifically, the invention pertains to preparation of a pasta product which is tolerant to exposure to non-boiling water. More specifically, this invention deals with a process for making pasta that can withstand soaking in cold water without disintegrating, lumping or leaching starch into the soak water.

BACKGROUND OF THE INVENTION

Pasta consumption is enjoying a rise in popularity for reasons of health, nutrition, convenience and economy. Home consumers and restauranteurs are therefore in need of a pasta product which is prepared in a very short amount of time without loss of palatability or flavor. Commercially available dry pasta takes 9 to 12 minutes to cook for optimal tenderness. Once cooked, the pasta tends to become sticky and lose a desirable mouth-feel upon standing for any period of time.

Typically, restaurants cook a large batch of pasta in advance and portion it out for single servings, to eliminate the 9- to 12-minute lag time in preparing a customer's meal. The single servings are then kept in a refrigerator, and when needed, each portion is dipped momentarily in boiling water using a colander-type utensil to heat and then drain it and then it is put onto a serving dish. While fast, pasta made in this manner lacks the taste and texture quality of freshly cooked pasta.

It is highly desirable to have a pasta product which may be cooked rapidly after exposure to non-boiling water. It is known in the art to prepare microwave cooked pasta. For example, Golden Grain Macaroni Company markets a product which is cookable in warm water. The package directions require placing pasta in warm water; microwaving to boiling; continued boiling for three minutes to absorb water; and flavouring with a cheese sauce. However, the boiled pasta suffers great starch loss and is only palatable when sauce is added to the boiled product to mask its gumminess and starchiness.

US 4423082 discloses a method for manufacturing precooked quick-cooking pasta products in which pasta components are initially heated to a temperature above 113°C, cooled to a temperature of 93°C or lower, and extruded.

GB2071479 describes a process for the preparation of precooked quick-cooking pasta which comprises steam-treating an extruded paste, wetting the treated paste and carrying out further steam treatment.

SUMMARY OF THE INVENTION:

The present invention concerns techniques for rapid cooking of a pasta which involves toleration for an initial exposure to room temperature or colder water. The pasta product is pretreated in such a way as to stabilize it against starch leaching in cold water.

One embodiment of this invention is performed by the steps of (a) soaking uncooked pasta in water having a temperature of between 33°F (0.6°C) and 140°F (60°C) for a period of time sufficient to hydrate the pasta; and (b) cooking soaked pasta resulting from the preceding step by heating for a period of time shorter than would be needed to cook pasta which had not been previously soaked. Starch loss from cooked pasta which results is less than 7.0% by weight of the uncooked pasta.

In preferred embodiments, the heating step may be accomplished either by microwave heating, or by immersion in hot or boiling water.

In other preferred embodiments, the pasta is packaged in individual portions, i.e., in water permeable boiling water-resistant containers such as perforated plastic bags.

In an especially preferred embodiment, the invention relates to a process for preparing a fast-cooking pasta product comprising the steps of (a) soaking a portion of uncooked pasta in a perforated polyethylene bag, in water having a temperature between about 40°F (4.4°C) and about 50°F (10°C) for a period sufficient to hydrate the pasta, i.e., of between about 4 and about 12 hours, and (b) either subjecting soaked pasta to microwave heating or immersing soaked pasta in hot or boiling water for between about 1 and about 2 minutes to cook the pasta. The pasta comprises semolina flour, water, optional glycerol monostearate, optional low temperature coagulatable protein, and optional sulfhydryl reducing agent. The process of the invention may be accomplished by selecting a pasta which, prior to the soaking step, was subjected to temperatures of at least about 180°F (82.2°C). Starch loss from cooked pasta which results is less than about 7.0% by weight of the uncooked pasta.

In another preferred embodiment, the invention relates to a process for preparing a fast-cooking pasta product, wherein the process comprises the steps of (a) soaking a portion of uncooked pasta in water having a temperature of between about 33°F (0.6°C) and about 140°F (60°C) for a period of time sufficient to hydrate the pasta, which pasta comprises semolina flour, water, low temperature coagulatable protein, optional sulfhydryl reducing agent, and optional glycerol monostearate; and (b) either subjecting soaked pasta to boiling water or microwave heating to cook the pasta. Prior to soaking, the uncooked pasta was subjected to temperatures of at least about 165°F (73.9°C), as by drying. Starch loss from cooked pasta which results is less than about 7.0% by weight of the uncooked pasta.

In yet another preferred embodiment, the invention relates to a process for preparing a fast-cooking pasta product, wherein the process comprises the steps of (a) soaking a portion of uncooked pasta in water having a temperature of between about 33°F (0.6°C) and about 140°F (60°C) for a period of time sufficient to hydrate the pasta, which pasta comprises semolina flour, water, low temperature coagulatable protein, sulfhydryl reducing agent, and optional glycerol monostearate; and (b) either subjecting soaked pasta to boiling water or microwave heating to cook the pasta. Prior to the soaking step, the pasta was aged for from about 3 to about 12 months. Again, starch loss is less than about 7.0%.

In still another embodiment, the invention relates to a shelf stable, microwave cookable, prepackaged pasta product containing uncooked pasta and sauce capable of preparation to a consumable, servable state by addition thereto of water, and cooking in a microwave oven.

## DETAILED DESCRIPTION OF THE INVENTION:

This invention pertains to processes for the more convenient cooking of pasta. The invention requires pasta which has a good tolerance to exposure to room temperature or cooler water. The processes of the invention involve the pretreatment of the pasta to develop such tolerance and the subsequent preparation either by presoaking in cool water and cooking or by simply cooking by microwave irradiation.

In one embodiment, the process comprises the steps of soaking uncooked pasta in water for a period of time sufficient to hydrate the pasta and subsequently heating the soaked pasta for a period of only 1 to 2 minutes to cook the pasta.

Conventional pasta preparation is a fairly time-consuming process, taking at least about fifteen minutes. Before the pasta encounters water in which it is to be cooked, the water must be at or near the boiling point in order to set gluten in the pasta and prevent leaching of the starch into the water. The subsequent cooking stage requires about 9 to 12 minutes.

It is a surprising advantage of the present invention that it is possible to treat uncooked pasta with room temperature or colder water to hydrate the pasta, and subsequently cook the resulting hydrated pasta for a short period of time without appreciable loss of starch into the water. In fact, the starch loss is less than 7.0% based on the weight of uncooked pasta.

It has surprisingly been found that, when pasta, which inherently contains protein in the form of gluten, is subjected to a temperature of at least 165°F (73.9°C) dry bulb, the protein component which surrounds the starch granules, and which is water soluble in its native form, at least partially denatures, resulting in its effectively encapsulating the starch granules by forming a water insoluble protein matrix in which the starch is entrapped. This matrix renders the pasta stable to starch leaching even in the presence of cold water. Conventional pasta that has not been subjected to this high temperature denaturation, which may be of short duration, must immediately contact extremely hot water in order to set the protein matrix; otherwise, the starch will rapidly leach out into the cooking water, resulting in a mushy, gummy, unsatisfactory product. The result in the present invention is a storage-stable, still uncooked pasta which has the unique advantage of being able to withstand exposure to cold water without leaching starch into the water. This confers the unique property onto the pasta that it may be hydrated without cooking, so that it may undergo the lengthiest portion of its preparation prior to its actual exposure to heat. Thus, the actual cooking process may be accomplished in only one to two minutes. Alternatively, the pasta may be subjected to room temperature water and immediately heated by microwave irradiation, as will be discussed infra.

Uncooked pasta may be prepared from any formulation known in the art. By "uncooked" is meant pasta wherein a major portion, i.e., greater than about 80% by weight of the total starch content, is ungelatinized. The term "cooking" as used herein refers to the process of gelatinizing the starch and heating the pasta.

Pasta is prepared from an "alimentary paste" or dough by which is meant a glutinous flour and water mixture. Alimentary pastes or doughs are generally made from coarse, hard flours obtained from hard wheat such as the middlings of durum wheat, often referred to as "semolina flour" or "semolina". In addition, fine flours such as durum flour, wherein 98 weight percent passes through a 0.210 mm (70 mesh) sieve, are also suitable and are intended to fall within the scope of the term "glutinous flour". The only requirement for

3

the flour is that it provide a self supporting paste upon mixture with an appropriate amount of water. Semolina typically comprises a major portion of the flour in alimentary pastes because it is highly glutinous, i.e., has a high content of the protein gluten which is capable of denaturing to provide a self-supporting pasta. The denaturation of gluten will be discussed in further detail, infra.

A typical alimentary paste used to prepare pastas suitable for the present invention comprises, based on the weight of uncooked pasta, between 67.0% and 80.0% by weight (solids basis) of semolina flour (having an inherent moisture content of between 10% and 15% and preferably between 11% and 14% by weight, and a gluten content of between 11% and 14% by weight), the balance being optional additives and added water.

Several additives may be added to the flour/water alimentary pastes suitable for use in the present invention. Some suitable additives to be discussed herein include glycerol monostearate (GMS); an added low temperature coagulatable protein material; and a sulfhydryl reducing agent.

The first additive is a commercially available glycerol monostearate (GMS) or other monoglyceride. When optionally used, GMS improves the texture and "bite" of the resulting alimentary paste, and also reduces the pressure necessary to extrude the paste. When used, GMS comprises between 0 and 2% (e.g., between 0.5% and 2.0%) by weight of the alimentary paste, and preferably between 1.0% and 1.5% by weight of the paste.

The second additive is an added low temperature coagulatable protein material, distinct from the gluten component inherent in the glutinous flour. These protein materials are ones which coagulate (i.e., denature) at temperatures of about 140°F (60°C) or above. The exact temperature at which the protein denatures is dependent on various factors including moisture content; higher moisture contents require lower temperatures to denature the protein material. The added protein may serve to enhance the cold water tolerance and resistance to starch leaching of the present invention, rendering resultant pastas somewhat more resistant to starch leaching in cold water. The added proteins include, but are not limited to, albumin, whole egg, egg white, egg yolk, whey protein concentrate, and mixtures thereof. Any of these protein materials may be added dry or as is. A preferred protein material is egg white. When used, the added protein component comprises up to 3.0% by weight of the total paste, preferably between 0.5% and 3.0% by weight based on the alimentary paste. As will be seen below, the addition of protein becomes essential only at heat treatment temperatures of less than 180°F (82.2°C).

A third additive is one or more sulfhydryl reducing agents. The presence of the sulfhydryl reducing agent, in addition to permitting the formation of an extrudable dough with less water, is believed to facilitate the irreversible denaturation of the gluten. Sulfhydryl reducing agents which have been found to be useful in the manufacture of pasta products include sodium metabisulfite ($Na_2S_2O_5$), cysteine, water-soluble cysteine salts such as 1-cysteine hydrochloride, glutathione and other sulfite salts. Sulfhydryl reducing agents are compounds which are capable of initiating reactions which reduce -S-S- bonds in gluten to form -SH groups. The sulfhydryl reducing agents may be utilized either singularly or in combination. The percentage of the sulfhydryl reducing agent present in the pasta paste or dough, when used, is between 0 and 0.2% (e.g., between 0.005% and 0.2%) by weight of the paste, and preferably between 0.02% and 0.04% by weight, based on paste weight. The percentage range remains the same for a combination of sulfhydryl reducing agents. At heating temperatures of 165°F (73.9°C) or lower, addition of a reducing agent becomes essential, as well as an aging step, as will be discussed in further detail below.

Other optional ingredients include added vitamins typically added to enrich food products, e.g., B-vitamins.

The remainder of the paste comprises water. Water is preferably introduced in the form of ice during extrusion, to prevent swelling of the paste during extrusion. The water, or moisture, content is between 20.0% and 30.0% by weight of the paste. In this application, water or moisture content refers to total moisture of the paste, i.e., the total of inherent moisture, (moisture naturally present in the flour and other ingredients), and added water. The term "water" as used herein includes water in all physical states, i.e., steam, ice or liquid, or mixtures thereof.

The flour, water and any additives used may be mixed in any way conventional in the art, such as by mixing in a vertical cutter mixer (e.g., a Hobart Cutter/Planetary Mixer) for approximately one minute, at which time the pasta dough is ready for extrusion in any of the conventional pasta shapes. Alternatively, the components of the paste may be separately introduced into an extruder without prior mixing. These extruded pasta shapes are then preferably subjected to a drying step, discussed below.

Shaped pasta products may be prepared from the paste either by extrusion or by rolling.

Extrusion can be performed with any acceptable extruder. The alimentary paste is forced through the holes of the extruder die to obtain the desired shape. The holes in the extruder die prescribe the profile of the alimentary paste. The alimentary paste passes through the die due to internal pressures generated by a rotating screw or screws. Vacuum pressure may or may not be used. Typical extruder conditions include a barrel temperature of 70°F to 120°F (21.1°C to 48.9°C); a screw temperature in the same range; vacuum of 34.6 to 101.3 kPa (26 to 76 cm Hg); head temperature of 100°F to 140°F (37.8°C to 60°C); and die orifice pressure of 3447 kPa to 13790 kPa (500 psig to 2000 psig). The extruded alimentary paste may be cut to desired lengths to provide a product in substantially final form. Cutting generally occurs at the extruder die and may be carried out in a conventional manner. Cutting is not essential to the practice of this invention since the alimentary paste may be formed into desired lengths by pulling the extrudate away from the die. All conventional pasta shapes are suitable for use in this invention.

Extruders which have been found acceptable include the DeMaco-S25 extruder, the Mapimpianti GF20 extruder and commercially available extruders marketed by Brabender, Buhler or Braibanti. For optimal extrusion, the barrel temperature of the extruder should be approximately 120°F (48.9°C), and the extruder should have 33.9 to 84.7 kPa (10 to 25 inches of mercury) vacuum, a power capacity of 5 to 10 amps, and a die orifice pressure of 12410 to 18620 kPa (1800 to 2700 psi).

A suitable extrusion process is a so-called low moisture, high temperature process, i.e., one where the final moisture content of the resulting paste is between 20% and 28% by weight, based on total moisture in the pasta. Such a process is disclosed in EP-A-0288136.

While particularly close control of the moisture content is not essential, it is desirable to keep the moisture content at the start of processing within a range of between 16% and 28% by weight. A particularly preferred moisture content is less than or equal to 26% by weight. A moisture content above 16% is desirable because protein denaturation is facilitated at such levels, and because the temperature necessary to denature the gluten is higher with lower moisture contents. However, if the moisture content is above about 30%, starch gelatinization begins to occur.

The extruded pasta product may be in any of the conventional pasta shapes, such as spaghetti, linguini, rotini, elbows, spirals, shells, conchiglioni, ziti, vermicelli, fusilli, fettucine, tortellini, ravioli, manicotti, lasagna, rote or tortiglioni.

Alternatively, a non-extruded pasta product, such as fettucine, which is prepared from rolled sheets of alimentary paste, may be utilized in the present process.

Following shaping, conventional pasta is generally subjected to a drying step to lower its moisture content from between 20% and 30% by weight down to between 10% and 15% and preferably between 11% and 14%, based on the weight of the dried pasta. Traditionally, pasta is dried at a temperature of 110°F (43.3°C) dry bulb, and 100°F (37.8°C) wet bulb for about 14 to 36 hours.

Modern drying techniques, termed "tres haute temperature (THT)" drying, however, require about 120 to 360 minutes, and typically involve a two-step treatment, i.e., a first step involving drying at 160°F (71.1°C) to 220°F (104.4°C) dry bulb, and 145°F (62.8°C) to 175°F (79.4°C) wet bulb for about 120 to 240 minutes, followed by an optional longer, cooler drying at 90°F (32.2°C) to 160°F (71.1°C), dry bulb and 98°F (36.7°C) wet bulb for from 0 to about 120 minutes. A particularly preferred variation involves the use of an air velocity of about 70.8 dm$^3$/s (150 cft/min). This in turn allows a significantly shorter drying time of as few as 75 minutes, i.e., a first step of about 15 to 30 minutes and a second step of about 30 to 120 minutes. Following drying, the moisture content is between 10% and 11%.

A suitable dryer is disclosed in U.S. Patent 4,699,048 to Pavan. Other suitable dryers include Standard Industries' batch dryer and Stein's continuous dryer. It has only now been discovered that exposure of the shaped pasta to high temperatures in a manner described in more detail below, i.e., at a temperature of at least 180°F (82.2°C) even for relatively short periods of time results in a raw pasta product that is uniquely capable of exposure to cold water, without starch leaching out into the water or experiencing lumping or disintegration, such that the pasta can become hydrated without cooking, allowing cooking to be accomplished in a period of time as brief as one to two minutes.

This high temperature treatment of the uncooked pasta may be accomplished in any of a number of ways, including treatment in a dryer (e.g., a hot air, humidity controlled circulating oven), microwave oven, heated drum, infrared tunnel, dielectric heater, or by contact with superheated steam. The high temperature treatment may be part of the drying cycle but need not be; high temperature combined with high humidity, for example, would not substantially dry the pasta but would at least partially denature the protein nonetheless. Two preferred sources of the requisite high temperature include a dryer or a microwave oven.

As discussed above, one suitable means of conducting the high temperature treatment includes high temperature drying which involves an initial step of heating the pasta to from 160°F (71.1°C) to 220°F (104.4°C) for a period of at least 15 minutes, and then finishing the drying at a temperature of from approximately 90°F (32.2°C) to 160°F (71.1°C) for at least an additional 30 minutes to two hours. If the initial heat treatment does not attain at least 165°F (73.9°C), sufficient protein denaturation will not occur; if the temperature goes significantly above 220°F (104.4°C), vitamins and the essential amino acid lysine present in the pasta may be destroyed, and a brown coloration may result. Additionally, at temperatures above 212°F (100°C) water will boil out of the pasta, which may result in cracking and a resultant weakened structure.

If the high temperature treatment is at least 180°F (82.2°C), a pasta capable of preparation in accordance with the present invention may be prepared from semolina and water without the necessity for any of the aforedescribed additives. However, if the drying temperature is in excess of 165°F (73.9°C) and below 180°F (82.2°C) protein denaturation should be facilitated by the addition of a low temperature coagulatable protein such as egg whites. When protein is added in this embodiment, it should be present in the aforedescribed range, i.e., between 0.5% and 3.0% of the paste from which the pasta is prepared.

While the drying process requires that the pasta encounter the higher temperature range for at least 15 minutes, it has been found that, for the purpose of setting the protein matrix, the pasta need only encounter these high temperatures for a period of about five minutes or less.

The high temperature drying treatment is a preferred treatment inasmuch as it not only sets the protein matrix but assists in the needed drying step, and also, relative to conventional drying, enhances the retention of the pasta's natural golden color, retention of at least 50% of vitamins added to the uncooked pasta, prevention of browning by the Maillard reaction, and improvement in the texture of the pasta once cooked. Additionally, at the initial high temperature, pasteurization and denaturation of discoloring enzymes such as lipoxidase, polyphenol-oxidase and beta-amylase occurs, thus increasing the shelf life of pasta products so produced. Furthermore, pasta dried in this manner, when cooked, remains non-sticky for a period of time longer than conventionally-prepared pasta.

One deficiency of this method is that, if dried too fast, rapid evaporation occurs and cracking results. This difficulty may be abated by drying the pasta in a high humidity (i.e., above 80%) environment.

Another preferred means of high temperature treatment is via microwave heating. This mode of heating is advantageous inasmuch as it is very fast and efficient, results in a lesser water loss, and therefore reduces the problem of cracking.

However, any of the heat means discussed above, so long as it results in a temperature in the required range, may be successfully employed.

In an alternative, though less preferred embodiment, an uncooked pasta capable of being soaked in cold water and subsequently cooking for between 1 and 2 minutes may be prepared in the absence of a heating step of 165°F (73.9°C) or more. In this embodiment, a sulfhydryl reducing agent (e.g., cysteine), in addition to a low temperature coagulatable protein, must be added to the alimentary paste from which the pasta is made, and subsequent to extrusion into shaped pasta and drying, e.g., at less than 165°F (73.9°C), or less, the pasta must be aged, i.e., for from 3 to 12 months. While not desiring to be bound to any particular theory, it is believed that the aging process allows the gluten in the pasta to spontaneously denature, and the reducing agent sets the denatured protein in a stable configuration capable of binding starch granules. This method is a less preferable means of attaining a cold soakable pasta because of its lengthy time requirement.

Once the pasta has been subjected to the above steps, it may be packaged by any means known in the art. A particularly preferred mode of packaging is to package the uncooked pasta into individual portion bags, i.e., of 3 to 4 ounces (85.2 to 113.6 g) each, such that numerous portion bags may be cold water soaked, e.g., overnight, and the soaked portion bags removed on an as-needed basis to boiling water for cooking and single-serving service. For example, the portions may be packaged in a water permeable perforated plastic bag or mesh bag of a water-impervious plastic material such as polyethylene or polyamide. A particularly preferred bag is of VisQueen®, from Ethyl Corporation, a water impervious polyethylene fabric having a nominal thickness of 25.4 um (1 mil) and comprising a multitude of tapered holes having hexagonal base configurations.

In another embodiment, a perforated container in the form of a colander may be used to scoop out and cook an individual portion of soaked pasta.

In still another embodiment, the pasta may be packaged in a microwave-safe, e.g., cardboard, container in combination with a dehydrated sauce. This embodiment will be discussed hereinbelow.

Process of the Invention

The pasta products prepared in accordance with the above discussion may now be subjected to the processes of the present invention which require toleration to exposure to cool water. One such process involves a cold soaking step and a brief cooking step. The pasta which results is characterized by experiencing a starch loss after the soaking and cooking steps of less than 7.0% by weight, based on the weight of the uncooked pasta.

The first step of the process involves soaking the so-treated uncooked pasta in cold water, i.e., water at a temperature between 33°F (0.6°C) and 140°F (60°C) for a period of time sufficient to hydrate the pasta. By "hydrated" is meant that the pasta has absorbed water to the point that no hard centers remain in the pasta. Alternatively, water-based cooking fluids such as milk or broth may be employed in lieu of water. Preferably, the cold water is between 40°F (4.4°C) and 75°F (23.9°C) and more preferably between 40°F (4.4°C) and 50°F (10°C). In any event, the water is significantly below its boiling point of 212°F (100°C). Soaking is carried out for whatever length of time is necessary to hydrate the pasta; this may be accomplished in as few as 4 hours, i.e., 4 to 12 hours, but may conveniently be carried out overnight. Preferably, the soaking step is performed under refrigeration conditions to prevent microbial growth. The soaking may be performed on individual portions such as with the perforated bag embodiment, or on a large batch from which individual portions may be removed, such as by scooping out a predetermined portion size and removing it to a cooking vessel.

Once the pasta has been soaked for the requisite period of time, it may be subjected to heat to cook it. Cooking may be accomplished in a number of ways, such as via a heat source selected from boiling water, steam, superheated steam, hot air, dielectric heat, microwave radiation, ultrasonic energy and radiant heat. Following cooking, the pasta experiences a starch loss of less than 7.0%, and preferably less than 3.0%, by weight based on uncooked pasta weight. "Starch loss" is defined as the amount of starch present in the water in which the pasta has been cooked.

Preferred methods of heating are immersion in boiling water and via microwave heating. Heating by microwave irradiation has the advantage of eliminating the need for draining the pasta after cooking, which not only offers convenience but also reduces the loss of water-soluble vitamins and other nutrients.

The cooking time in the present invention is characterized as being shorter than would be needed to completely cook pasta which had not been soaked in cool water. Generally, the cooking time in the present invention is in the range of about 1 to about 2 minutes. Generally, longer shapes of pasta (such as spaghetti) require up to 2 minutes' cooking time, whereas shorter varieties (such as elbow macaroni) require only 1 minute to cook. In contrast, conventionally prepared pasta which has not been pre-soaked requires at least 7 minutes' cooking time in boiling water.

A particularly preferred way to employ the present invention, suitable for use in fast-food commercial operations as well as in the home, is to soak single-serving portion bags of the pasta in a cold water-filled vessel overnight. When ready to consume, a so-treated bag is dropped into boiling water for the required time period (with swirling, in the case of spaghetti or other long cut products). When cooked, the bag is removed, cut open and the cooked pasta poured onto a serving plate for consumption.

Another suitable way to employ the present invention is to cold soak a large batch of pasta, and when cooking is desired, to remove an individual portion into a perforated colander, and to cook that portion in the colander.

In another embodiment, the invention pertains to a shelf stable, microwave cookable prepackaged pasta product. It has also been found that, as the pasta is tolerant to exposure to soaking in cold water, it is capable of being exposed to room temperature or colder water for at least the period of time necessary to boil water in which the pasta is to be cooked in a microwave oven, again with a starch loss of less than 7.0% by weight. The package contains uncooked pasta and a sauce. The pasta may be packaged dry in a conventional container or sealed in vapor barrier pouches which are disclosed in EP-A-0342831 published 23 November 1989.

The sauce may be a dehydrated one which is either a natural or artificial flavoring and which may contain the flavor of cheese, cream, butter, tomato sauce, or any other desired flavoring, and which is hydratable by addition of small amounts of water. Alternatively, a water-based liquid such as milk or broth may be used. The sauce may be packaged separately from the pasta for separate cooking or may be premixed with the pasta. By judicious choice of the volume of liquid added, no draining is required after cooking.

The pasta may be any of the varieties discussed hereinabove, i.e., spaghetti, linguini, rotini, elbows, spirals, shells, conchiglioni, ziti, vermicelli, fusilli, fettucine, tortellini, ravioli, manicotti, lasagna, rote or tortiglioni.

The pasta product is packaged in any packaging which is shelf stable and microwave safe and penetrable. Such packaging includes paper (e.g., cardboard), glass or plastic. The packaging may comprise individual portions (e.g., of 85.2 to 113.6 g (3 to 4 ounces) each) or bulk portions (e.g., of 2.27 to 4.54 kg (5 to 10 pounds)) for institutional use. By shelf stable is meant that the packaging protects its contents from degradation under non-refrigerated conditions (i.e., above 40°F (4.4°C)) for a time period of up to 36 months' time.

The microwave cookable prepackaged product may be prepared by adding non-boiling water or other liquid, e.g., tap water, to either each of the separate packages for the sauce and pasta or, preferably, directly to the package itself containing a mixture of the two. The amount of added water should be sufficient to hydrate the pasta and dry sauce mix but preferably small enough that, after cooking, all of the liquid is absorbed into the product so that draining of excess water is not necessary.

According to this embodiment, the added water should maintain in contact with the product for at least about 10 seconds, and then the mixture subjected to microwave heating for a period of time sufficient to completely cook the product (i.e., for between about 6 and about 10 minutes). The resulting pasta exhibits a starch loss of less than about 7.0%, and preferably less than about 3.0% by weight based on the uncooked pasta. (If the pasta is maintained in contact with cold water for a period of time sufficient to fully hydrate it, microwave cooking may be accomplished in one to two minutes.) After cooking in a microwave oven, the pasta product is in a consumable, servable stage.

In the embodiment where the sauce and pasta are packaged separately, the packages are then mixed, and the product is then servable and consumable without additional preparation such as draining. In this manner, a no-drain casserole such as macaroni and cheese is easily prepared by adding water or a water-containing liquid to the microwavable pasta along with optional flavorants such as butter, cheese sauce, etc. The mixture is exposed to heating via microwave radiation with occasional stirring until cooked.

The following Examples are provided to further illustrate the invention. In these Examples and throughout the specification, all temperatures are expressed in degrees Fahrenheit and each value is accomplished by an approximation of such value in degrees Celsius. In addition, all percentages are by weight, unless expressly indicated to be otherwise.

EXAMPLES

Preparation of High Temperature Dried Pasta Suitable for Use in the Present Invention

EXAMPLE 1

An alimentary paste was made by mixing the following ingredients:

|  | Parts By Weight |
|---|---|
| Semolina flour (solids basis) | 67.96 |
| Glycerol monostearate (suspension, solids basis) | 1.00 |
| dried egg whites | 3.00 |
| 1-cysteine hydrochloride (400 ppm) | 0.04 |
| total water, (combination of added tap water and moisture in ingredients) | 28.00 |

The glycerol monostearate, cysteine and water sufficient to make the total moisture content 28% were mixed thoroughly in a laboratory mixer. The mixture was added to the semolina flour in a Hobart Cutter mixer in 3 equal portions with one minute mixing after each addition. Dried egg whites were then added and mixed for one additional minute.

The paste so produced was fed into a Mapimpianti-GF20 pasta extruder and forced through a spaghetti die. The extruder was operated at a screw speed of 20 rpm; screw temperature of 100°F (37.8°C); barrel temperature of 100°F (37.8°C); head temperature of 120°F (48.9°C); and die pressure of 10340 kPa (1500 psig). Desired lengths were cut with a cutoff knife. Cut pieces of 0.152 to 0.203 m (6 to 8") length of spaghetti were nested on a drying tray.

Drying trays containing the nested spaghetti were dried using a Standard Industries' 22.7 kg (50 pound) batch dryer. The spaghetti was dried at 180°F (82.2°C) at 80% relative humidity for 120 minutes and then at 110°F (43.3°C) at 70% relative humidity for 480 minutes.

EXAMPLE 2

An alimentary paste was made which was identical to the one used in Example 1. The ingredients were mixed and extruded according to the process of Example 1, except that, instead of spaghetti, rotini was made using the appropriate die on the extruder. In this Example, the extruder had a barrel temperature of 96°F (35.6°C); screw temperature of 96°F (35.6°C); head temperature at the die of 120°F (48.9°C); and die pressure of 13790 kPa (2000 psig). 0.0254 to 0.0381 m (one- to one-and-one-half-inch) lengths of rotini

EP 0 352 876 B1

were cut with an automatic cutoff knife and collected in a drying tray.

Trays of the rotini were loaded into the 22.7 kg (50 pound) Standard Industries' batch dryer and dried at 165°F (73.9°C) at 70% relative humidity for 120 minutes, then at 120°F (48.9°C) also at 70% relative humidity for 6 hours.

Starch Losses of Pasta Prepared by Microwave Cooking According to the Present Invention

EXAMPLES 3-8

Elbow macaroni was prepared according to the following high temperature drying process and evaluated for starch loss as follows.

A paste from semolina flour having either 24% or 30% total moisture (as specified in Table 1 below) was mixed, where specified, with sodium bisulfite reducing agent at a level of 200 ppm. Moisture was incorporated into the mixture in the form of ice cubes ($0.0001 m^2$ ($1 cm^2$)) using a high speed Hobart Cutter mixer. Dough (paste) was extruded using a Mapimpianti GF 20 extruder at either 24% or 30% extrusion moisture level. Small elbows were made using a die with teflon inserts.

The extruded elbows were dried in a 22.7 kg (50 pound) batch dryer in a two-step process employing, as a first drying step, either 165°F (73.9°C) dry bulb and 150°F (65.6°C) wet bulb conditions; or 190°F (87.8°C) dry bulb and 180°F (82.2°C) wet bulb, as specified.

Solids loss and weight gain were measured according to the following method.

350 g of room temperature tap water were weighed into a $2 dm^3$ glass beaker. 170.0 g of macaroni was added and mixed. The mixture was placed in a microwave oven at 700 watts or above and cooked for 4 minutes at full power. The contents were then stirred and cooked at full power for an additional 4 minutes to make the total cooking time 8 minutes. The cooked macaroni was then taken out of the beaker and stirred with 500 ml of water for 15 seconds. The mixture was allowed to stand for 10 seconds, stirred again quickly, then drained through a tared colander into a tared vessel, and allowed to continue draining for one minute.

The drained water and cooked pasta were each weighed, and the percent solids lost in the drained water determined. The percent cooking loss and percent weight gain were determined as follows:

$$\% \text{ weight gain} = \frac{(\text{weight of cooked pasta} - 170) \times 100}{170}$$

$$\% \text{ cooking (starch) loss} = \frac{\% \text{ solids} \times \text{weight of drained water}}{170}$$

The resulting solids (starch) loss into the drain water; weight gain of the pasta; and texture are given in Table 1 for various samples subjected to microwave cooking.

9

TABLE 1

| Cooking Losses, Weight Gain and Texture of Pasta Prepared by Microwave Cooking in Accordance with the Present Invention | | | | | | |
|---|---|---|---|---|---|---|
| Example No. | Drying temperature | Moisture Content | 200 ppm Sodium Bisulfite Added | % Solids in Drain Water | % Weight Gain | Texture* |
| 3 | 165°F (73.9°C) | 30% | No | 5.28 | 260 | normal but soft |
| 4 | 165°F | 24% | Yes | 3.52 | 257 | very good |
| 5 | 165°F | 24% | No | 6.50 | 266 | very good |
| 6 | 190°F (87.8°C) | 30% | No | 3.08 | 259 | normal, firm |
| 7 | 190°F | 24% | Yes | 2.76 | 260 | normal, firm |
| 8 | 190°F | 24% | No | 3.60 | 254 | normal |

* determined by a select panel


COLOR RETENTION PROPERTIES OF PASTA PREPARED ACCORDING TO THE PRESENT INVENTION

EXAMPLES 9-62

Semolina elbow macaroni was prepared and dried according to the process of Examples 3-8. Fifty-four samples were subjected to varying conditions of percent extrusion moisture; drying time; drying temperature; relative humidity during drying; and presence or absence of 200 ppm of sodium bisulfite reducing agent.

The effect of these conditions on color retention of pasta was measured according to the American Association of Cereal Chemists (AACC) method #14-50. The results are recorded in Table 2.

## TABLE 2

### Color Retention of Pasta Prepared in Accordance With the Present Invention

| Example No. | % Moisture of Pasta Dough | % Moisture in Extruded Pasta | 200 ppm Sodium Bisulfite Added | Drying Conditions* | Drying Time, (Minutes) | % Color Retained |
|---|---|---|---|---|---|---|
| 9 | 30 | 27.30 | No | LO | 0 | 57.2 |
| 10 | 30 | 24.56 | No | LO | 50 | 41.6 |
| 11 | 30 | 19.33 | No | LO | 110 | 36.0 |
| 12 | 30 | 15.80 | No | LO | 170 | 32.4 |
| 13 | 30 | 12.13 | No | LO | 230 | 31.7 |
| 14 | 30 | 10.05 | No | LO | 290 | 27.7 |
| 15 | 30 | 29.12 | No | MED | 0 | 57.2 |
| 16 | 30 | 14.07 | No | MED | 112 | 21.9 |
| 17 | 30 | 11.90 | No | MED | 172 | 20.3 |
| 18 | 30 | 9.73 | No | MED | 232 | 16.3 |
| 19 | 30 | 9.28 | No | MED | 292 | 17.0 |
| 20 | 30 | 8.26 | No | MED | 352 | 16.0 |

\* Key to Drying Conditions

LO = 114°F (45.6°C) dry bulb;
98°F (36.7°C) wet bulb;
56% relative humidity.

MED = 165°F (73.9°C) dry bulb;
150°F (65.6°C) wet bulb;
68% relative humidity.

HI = 190°F (87.8°C) dry bulb;
180°F (82.2°C) wet bulb;
80% relative humidity.

## TABLE 2 contd.

### Color Retention of Pasta Prepared in Accordance With the Present Invention

| Example No. | % Moisture of Pasta Dough | % Moisture in Extruded Pasta | 200 ppm Sodium Bisulfite Added | Drying Conditions* | Drying Time, (Minutes) | % Color Retained |
|---|---|---|---|---|---|---|
| 21 | 30 | 28.30 | No | HI | 0 | 57.2 |
| 22 | 30 | 26.18 | No | HI | 60 | 59.0 |
| 23 | 30 | 21.87 | No | HI | 120 | 50.0 |
| 24 | 30 | 16.09 | No | HI | 180 | 36.2 |
| 25 | 30 | 12.25 | No | HI | 240 | 20.6 |
| 26 | 30 – | 10.35 | No | HI | 300 | 19.3 |
| 27 | 24 | 22.12 | Yes | LO | 0 | 64.2 |
| 28 | 24 | 21.01 | Yes | LO | 38 | 51.7 |
| 29 | 24 | 17.00 | Yes | LO | 98 | 41.8 |
| 30 | 24 | 13.97 | Yes | LO | 158 | 37.1 |
| 31 | 24 | 12.66 | Yes | LO | 218 | 35.2 |
| 32 | 24 | 10.28 | Yes | LO | 278 | 35.6 |

* Key to Drying Conditions

LO = 114°F (45.6°C) dry bulb;
98°F (36.7°C) wet bulb;
56% relative humidity.

MED = 165°F (73.9°C) dry bulb;
150°F (65.6°C) wet bulb;
68% relative humidity.

HI = 190°F (87.8°C) dry bulb;
180°F (82.2°C) wet bulb;
80% relative humidity.

### TABLE 2 contd.

### Color Retention of Pasta Prepared in Accordance With the Present Invention

| Example No. | % Moisture of Pasta Dough | % Moisture in Extruded Pasta | 200 ppm Sodium Bisulfite Added | Drying Conditions* | Drying, Time, (Minutes) | % Color Retained |
|---|---|---|---|---|---|---|
| 33 | 24 | 22.82 | Yes | MED | 0 | 64.2 |
| 34 | 24 | 16.48 | Yes | MED | 75 | 36.6 |
| 35 | 24 | 12.95 | Yes | MED | 135 | 34.9 |
| 36 | 24 | 11.51 | Yes | MED | 195 | 27.6 |
| 37 | 24 | 10.00 | Yes | MED | 255 | 31.1 |
| 38 | 24 | 9.43 | Yes | MED | 315 | 29.0 |
| 39 | 24 | 22.90 | Yes | HI | 0 | 64.2 |
| 40 | 24 | 20.18 | Yes | HI | 45 | 59.2 |
| 41 | 24 | 16.69 | Yes | HI | 105 | 51.7 |
| 42 | 24 | 11.74 | Yes | HI | 165 | 33.0 |
| 43 | 24 | 8.70 | Yes | HI | 225 | 23.7 |
| 44 | 24 | 7.20 | Yes | HI | 285 | 23.1 |

\* Key to Drying Conditions

LO = 114°F (45.6°C) dry bulb;
98°F (36.7°C) wet bulb;
56% relative humidity.

MED = 165°F (73.9°C) dry bulb;
150°F (65.6°C) wet bulb;
68% relative humidity.

HI = 190°F (87.8°C) dry bulb;
180°F (82.2°C) wet bulb;
80% relative humidity.

## TABLE 2 contd.

### Color Retention of Pasta Prepared in Accordance With the Present Invention

| Example No. | % Moisture of Pasta Dough | % Moisture in Extruded Pasta | 200 ppm Sodium Bisulfite Added | Drying Conditions* | Drying Time, (Minutes) | % Color Retained |
|---|---|---|---|---|---|---|
| 45 | 24 | 22.11 | No | LO | 0 | 86.8 |
| 46 | 24 | 20.83 | No | LO | 25 | 79.6 |
| 47 | 24 | 16.69 | No | LO | 85 | 76.2 |
| 48 | 24 | 11.93 | No | LO | 145 | 73.1 |
| 49 | 24 | 10.16 | No | LO | 205 | 70.8 |
| 50 | 24 | 9.50 | No | LO | 265 | 70.4 |
| 51 | 24 | 23.51 | No | MED | 0 | 86.8 |
| 52 | 24 | 19.22 | No | MED | 56 | 54.3 |
| 53 | 24 | 12.49 | No | MED | 116 | 39.9 |
| 54 | 24 | 9.49 | No | MED | 176 | 44.7 |
| 55 | 24 | 9.58 | No | MED | 236 | 40.7 |
| 56 | 24 | 8.17 | No | MED | 296 | 40.8 |

\* Key to Drying Conditions

LO = 114°F (45.6°C) dry bulb;
98°F (36.7°C) wet bulb;
56% relative humidity.

MED = 165°F (73.9°C) dry bulb;
150°F (65.6°C) wet bulb;
68% relative humidity.

HI = 190°F (87.8°C) dry bulb;
180°F (82.2°C) wet bulb;
80% relative humidity.

## TABLE 2 contd.

### Color Retention of Pasta Prepared in Accordance With the Present Invention

| Example No. | % Moisture of Pasta Dough | % Moisture in Extruded Pasta | 200 ppm Sodium Bisulfite Added | Drying Conditions* | Drying Time, (Minutes) | % Color Retained |
|---|---|---|---|---|---|---|
| 57 | 24 | 23.40 | No | HI | 0 | 86.8 |
| 58 | 24 | 21.85 | No | HI | 25 | 75.2 |
| 59 | 24 | 16.41 | No | HI | 85 | 67.0 |
| 60 | 24 | 9.74 | No | HI | 145 | 52.1 |
| 61 | 24 | 8.49 | No | HI | 205 | 48.3 |
| 62 | 24 | 6.82 | No | HI | 265 | 48.3 |

* Key to Drying Conditions

LO = 114°F (45.6°C) dry bulb;
98°F (36.7°C) wet bulb;
56% relative humidity.

MED = 165°F (73.9°C) dry bulb;
150°F (65.6°C) wet bulb;
68% relative humidity.

HI = 190°F (87.8°C) dry bulb;
180°F (82.8°C) wet bulb;
80% relative humidity.

THIAMINE AND RIBOFLAVIN LOSSES IN PASTA PREPARED ACCORDING TO THE PRESENT INVENTION

EXAMPLES 63-71

Elbow macaroni prepared according to the procedure discussed in Examples 3-8 was cooked by conventional heating using excess boiling water and assayed to determine loss of thiamine and riboflavin in pasta using Association of Official Analytical Chemists (AOAC) method #44-031. Results are given in Table 3 which follows.

TABLE 3

Thiamine and Riboflavin Losses
in Pasta Prepared According
to the Present Invention

| Ex-ample No. | Drying Con-ditions* | % Mois-ture Con-tent | 200 ppm Sodium Bi-sul-fite Added | THIAMINE | | | RIBOFLAVIN | | |
|---|---|---|---|---|---|---|---|---|---|
| | | | | Initial mg/ 100g | Final mg/ 100g | % Loss | Initial mg/ 100g | Final mg/ 100g | % Loss |
| 63 | LO | 30 | No | 1.22 | 1.02 | 16.39 | 0.61 | 0.36 | 40.98 |
| 64 | LO | 24 | Yes | 1.11 | 0.91 | 18.01 | 0.52 | 0.36 | 30.77 |
| 65 | LO | 24 | No | 1.08 | 0.90 | 16.67 | 0.51 | 0.37 | 27.45 |
| 66 | MED | 30 | No | 1.22 | 0.84 | 31.15 | 0.61 | 0.39 | 36.06 |
| 67 | MED | 24 | Yes | 1.11 | 0.80 | 38.92 | 0.52 | 0.34 | 34.61 |
| 68 | MED | 24 | No | 1.08 | 0.89 | 17.59 | 0.51 | 0.37 | 27.45 |
| 69 | HI | 30 | No | 1.22 | 0.95 | 22.13 | 0.61 | 0.44 | 27.89 |
| 70 | HI | 24 | Yes | 1.11 | 0.88 | 20.72 | 0.52 | 0.41 | 21.15 |
| 71 | HI | 24 | No | 1.08 | 0.93 | 13.89 | 0.51 | 0.44 | 13.73 |

* Key to Drying Conditions

LO = 114°F (45.6°C) dry bulb;
98°F (36.7°C) wet bulb;
56% relative humidity.

MED = 165°F (73.9°C) dry bulb;
150°F (65.6°C) wet bulb;
68% relative humidity.

HI = 190°F (87.8°C) dry bulb;
180°F (82.2°C) wet bulb;
80% relative humidity.

MAILLARD REACTION PRODUCTS FORMATION IN PASTA PREPARED ACCORDING TO THE PRESENT INVENTION

EXAMPLES 72-80

Elbow macaroni prepared according to the process of the above Examples was tested, in its dried, uncooked state to determine discoloration (browning) as a measure of the extent of Maillard reaction products formation, a higher value being indicative of more advanced reaction. The measurement was made by forming an extract in cold, distilled water and measuring absorbance (O.D.) at 260 nm with a spectrophotometer. Results are given in Table 4.

16

TABLE 4

| Maillard Reaction Products Formation in Pasta Prepared According to the Present Invention | | | | |
|---|---|---|---|---|
| Example No. | Drying Temp. | % Moisture Content | 200 ppm Sodium Bisulfite Added | O.D. at 260 nm (baseline corrected) |
| 72 | 114°F (45.6°C) | 30 | No | 0.195 |
| 73 | 114°F | 24 | Yes | 0.192 |
| 74 | 114°F | 24 | No | 0.102 |
| 75 | 165°F (73.9°C) | 30 | No | 0.480 |
| 76 | 165°F | 24 | Yes | 0.072 |
| 77 | 165°F | 24 | No | 0.060 |
| 78 | 190°F (87.8°C) | 30 | No | 0.657 |
| 79 | 190°F | 24 | Yes | 0.131 |
| 80 | 190°F | 24 | No | 0.197 |

Cooking Instructions for a Fast-Cooking Pasta Product

EXAMPLE 81

A pasta product may be prepared in accordance with this invention by following the procedure set forth below.

A pot containing 3.41 dm$^3$ (3 quarts) of tap water is placed in a refrigerator. A mesh polyethylene bag containing 4 ounces (about 114 g) of uncooked pasta is dropped into the water and allowed to soak overnight in the water.

The next day, a large pot of 5.69 dm$^3$ (5 quarts) of tap water is brought to a rolling boil over a conventional stovetop burner. Optional salt and/or butter may be added to the boiling water. The bag of soaked pasta is dropped into the boiling water. A fork or ladle is used to occasionally swirl the bag in the water to separate its contents.

After 1 to 1 1/2 minutes, the bag is retrieved from the water and cut open with scissors. The cooked pasta contained therein is emptied onto a serving plate, optionally mixed with sauce or other flavoring and eaten.

Cooking Instructions for the Microwave Cookable Pasta Product of the Invention

EXAMPLE 82

The microwave cookable pasta product of the present invention may be prepared by following the procedure set forth below.

One cup of tap water is added to a microwavable single-serving paper container containing about 3 to 4 ounces (about 85 to about 114 g) of uncooked pasta. The water and pasta are mixed and allowed to sit for 10 seconds. The mixture is placed in a microwave oven, on high power, covered, for 6 minutes.

The container is removed from the oven, the contents stirred, and eaten directly from the container.

CONCLUSION

There has thus been discovered a novel process for preparing a fast-cooking pasta product. The pasta is surprisingly stable to starch leaching upon soaking in cold water, and to loss of vitamins, color change, and undesirable texture changes as often resulted in the prior art.

The key to the invention is a high temperature preparation step of the uncooked pasta. It has been found that such treatment, i.e., at a temperature in excess of 180°F (82.2°C), results in denaturation of gluten, the protein component of semolina flour. This denaturation results in an encapsulation of starch granules and other water soluble components, thus preventing their movement into the surrounding water. The result is a greatly enhanced structural integrity of the pasta, such that it is capable of withstanding contact with cold water and thus may be hydrated in cold water without cooking. The net result is a pasta product which is fully hydrated and thus may be cooked in a greatly reduced time period, i.e., 1 to 2 minutes. Furthermore, the high temperature treatment results in pasteurization of the product and denaturation of enzymes which result in discoloration of the dry pasta, thus allowing for enhanced shelf life. Alternatively, fast-cooking pasta may be prepared using a less high temperature preparation step. For example, if pasta containing a low temperature coagulatable material and a sulfhydryl reducing agent is heated even to below 165°F (73.9°C), and aged for 3 to 12 months, it will exhibit the desirable characteristics of the present invention.

**Claims**

1. A process for the rapid cooking of pasta comprising the steps of
   (a) soaking uncooked pasta in water having a temperature of between 33°F (0.6°C) and 140°F (60°C) for a period of time sufficient to hydrate said pasta; and
   (b) cooking soaked pasta resulting from step (a) by heating for a period of time shorter than would be needed to cook pasta which had not been previously soaked
      wherein starch loss from cooked pasta resulting from step (b) is less than 7.0% by weight based on uncooked pasta weight.

2. A process as claimed in claim 1, wherein said period of time in step (b) is between 1 and 2 minutes.

3. A process as claimed in claim 1 or claim 2, wherein said cooking step (b) is accomplished by microwave heating.

4. A process as claimed in claim 1 or claim 2, wherein said cooking step (b) is accomplished by immersion in boiling water.

5. A process as claimed in claims 1 to 4, wherein said soaking step (a) is performed at a temperature of between 40°F (4.4°C) and 50°F (10°C).

6. A process as claimed in claim 5, wherein said soaking step (a) is performed for a period of between 4 and 12 hours.

7. A process as claimed in claims 1 to 6, wherein said uncooked pasta of step (a) is soaked in an individual portion.

8. A process as claimed in claim 7, wherein said portion has a weight of between 85.2 g (3 ounces) and 113.6 g (4 ounces).

9. A process as claimed in claim 7 or claim 8, wherein said portion is packaged in a water-permeable container resistant to boiling water.

10. A process as claimed in claim 9, wherein said container is a perforated plastic bag.

11. A process as claimed in claim 10, wherein said container is a perforated polyethylene bag.

12. A process as claimed in claims 1 to 11, wherein the pasta of step (a) is selected from the group consisting of spaghetti, linguini, elbows, spirals, shells, conchiglioni, ziti, vermicelli, fusilli, fettucine, tortellini, ravioli, manicotti, lasagna, rote, tortiglioni and mixtures thereof.

13. A process as claimed in claims 1 to 12, wherein cooked pasta resulting from step (b) retains a natural golden color.

14. A process as claimed in claims 1 to 13, wherein said uncooked pasta is made up with added vitamins and at least 50% of vitamins present in said uncooked pasta are retained in said pasta subsequent to said cooking step (b).

15. A process as claimed in claims 1 to 14, wherein said uncooked pasta of step (a) comprises, based on weight of uncooked pasta,

(i) between 67.0% and 80.0% by weight of semolina flour having a moisture content in the range of between 11% and 14% by weight,

(ii) between 0% and 2% by weight of glycerol monostearate,

(iii) between 0% and 3.0% by weight of a protein material which coagulates at temperatures of 140°F (60°C) or above,

(iv) between 0% and 0.2% by weight of a sulfhydryl reducing agent and

(v) the remainder water.

16. A process as claimed in claim 15, wherein said protein material (iii) is selected from the group consisting of albumin, whole egg, egg white, egg yolk, whey protein concentrate and mixtures thereof.

17. A process as claimed in claim 15, wherein said protein material (iii) is egg white.

18. A process as claimed in claims 15 to 17, wherein said sulfhydryl reducing agent (iv) is selected from the group consisting of sodium metabisulphite, cysteine, water soluble cysteine salts, glutathione, and mixtures thereof.

19. A process as claimed in claims 15 to 17, wherein said sulfhydryl reducing agent (iv) is 1-cysteine hydrochloride.

20. A process as claimed in claims 15 to 19, wherein said uncooked pasta of step (a) comprises, based on weight of uncooked pasta, between 0.5% and 3.0% by weight of said protein material.

21. A process as claimed in claims 15 to 20, wherein said uncooked pasta of step (a) comprises based on weight of uncooked pasta, between 0.005% and 0.2% by weight of a sulfhydryl reducing agent.

22. A process as claimed in claims 20 or 21, wherein, prior to said soaking step (a), said uncooked pasta was aged for from 3 to 12 months.

23. A process as claimed in claims 1 to 22, wherein, prior to said soaking step (a), said uncooked pasta was subjected to temperatures of at least 180°F (82.2°C).

24. A process as claimed in claims 20 to 22, wherein, prior to said soaking step (a), said uncooked pasta was subjected to temperatures of at least 165°F (73.9°C).

25. A process as claimed in claim 23 or claim 24, wherein said temperatures are provided by a source selected from the group consisting of a dryer, a heated drum, a microwave oven, an infrared tunnel, a dielectric heater and superheated steam.

26. A process as claimed in claim 23 or claim 24, wherein said temperatures are provided by a dryer.

**Patentansprüche**

1. Verfahren zum schnellen Kochen von Teigwaren, umfassend die folgenden Stufen:

(a) Einweichen von nicht gekochten Teigwaren in Wasser mit einer Temperatur zwischen 33°F (0,6°C) und 140°F (60°C) während eines ausreichenden Zeitraums, um die Teigwaren mit Wasser zu sättigen (zu hydratisieren), und

(b) Kochen der eingeweichten Teigwaren aus Stufe (a) durch Erhitzen während eines kürzeren Zeitraums als er erforderlich wäre, um Teigwaren zu kochen, die nicht vorher eingeweicht worden sind,

wobei der Stärkeverlust der gekochten Teigwaren nach Stufe (b) weniger als 7,0 Gew.-%, bezogen auf das Gewicht der ungekochten Teigwaren, beträgt.

2. Verfahren nach Anspruch 1, wobei der Zeitraum in Stufe (b) zwischen 1 und 2 min beträgt.

3. Verfahren nach Anspruch 1 oder Anspruch 2, wobei die Kochstufe (b) durch ein Erhitzen mit Mikrowellen durchgeführt wird.

**4.** Verfahren nach Anspruch 1 oder 2, wobei die Kochstufe (b) durch Eintauchen in siedendes Wasser erreicht wird.

**5.** Verfahren nach den Ansprüchen 1 bis 4, wobei die Einweichstufe (a) bei einer Temperatur zwischen 40°F (4,4°C) und 50°F (10°C) durchgeführt wird.

**6.** Verfahren nach Anspruch 5, wobei die Einweichstufe (a) während eines Zeitraums zwischen 4 und 12 h durchgeführt wird.

**7.** Verfahren nach den Ansprüchen 1 bis 6, wobei die nicht gekochten Teigwaren der Stufe (a) in einzelnen Portionen eingeweicht werden.

**8.** Verfahren nach Anspruch 7, wobei die Portion ein Gewicht zwischen 85,2 g (3 ounces) und 113,6 g (4 ounces) besitzt.

**9.** Verfahren nach Anspruch 7 oder Anspruch 8, wobei die Portion in einem wasserdurchlässigen Behälter, der gegenüber siedendem Wasser beständig ist, verpackt ist.

**10.** Verfahren nach Anspruch 9, wobei der Behälter ein perforierter Kunststoffbeutel ist.

**11.** Verfahren nach Anspruch 10, wobei der Behälter ein perforierter Polyethylenbeutel ist.

**12.** Verfahren nach den Ansprüchen 1 bis 11, wobei die Teigwaren der Stufe (a) ausgewählt sind aus der Gruppe bestehend aus Spaghetti, Linguini, Hörnchen, Spiralen, Muscheln, Conchiglioni, Ziti, Vermicelli, Fusilli, Fettucine, Tortellini, Ravioli, Manicotti, Lasagna, Stäbchen, Tortiglioni und Gemischen davon.

**13.** Verfahren nach den Ansprüchen 1 bis 12, wobei die gekochten Teigwaren aus Stufe (b) eine natürliche goldene Farbe behalten.

**14.** Verfahren nach den Ansprüchen 1 bis 13, wobei die nicht gekochten Teigwaren hergestellt werden mit zugesetzten Vitaminen und wobei mindestens 50% der in den ungekochten Teigwaren vorhandenen Vitamine nach der Kochstufe (b) in den Teigwaren noch enthalten sind.

**15.** Verfahren nach den Ansprüchen 1 bis 14, wobei die nicht gekochten Teigwaren der Stufe (a) umfassen, bezogen auf das Gewicht der nicht gekochten Teigwaren,
   (i) zwischen 67,0 und 80,0 Gew.-% Grießmehl mit einem Feuchtigkeitsgehalt im Bereich zwischen 11 und 14 Gew.-%,
   (ii) zwischen 0 und 2 Gew.-% Glycerinmonostearat,
   (iii) zwischen 0 und 3,0 Gew.-% eines Proteinmaterials, das bei Temperaturen von 140°F (60°C) oder darüber koaguliert,
   (iv) zwischen 0 und 0,2 Gew.-% eines Sulfhydryl-Reduktionsmittels und
   (v) als Rest Wasser.

**16.** Verfahren nach Anspruch 15, wobei das Proteinmaterial (iii) ausgewählt ist aus der Gruppe bestehend aus Albumin, Vollei, Eiweiß, Eigelb, Molkenproteinkonzentrat und Gemischen davon.

**17.** Verfahren nach Anspruch 15, wobei das Proteinmaterial (iii) Eiweiß ist.

**18.** Verfahren nach den Ansprüchen 15 bis 17, wobei das Sulfhydryl-Reduktionsmittel (iv) ausgewählt ist aus der Gruppe bestehend aus Natriummetabisulfit, Cystein, wasserlöslichen Cysteinsalzen, Glutathion und Gemischen davon.

**19.** Verfahren nach den Ansprüchen 15 bis 17, wobei das Sulfhydryl-Reduktionsmittel (iv) 1-Cysteinhydrochlorid ist.

**20.** Verfahren nach den Ansprüchen 15 bis 19, wobei die nicht gekochten Teigwaren der Stufe (a), bezogen auf das Gewicht der nicht gekochten Teigwaren, zwischen 0,5 und 3,0 Gew.-% des Proteinmaterials enthalten.

**21.** Verfahren nach den Ansprüchen 15 bis 20, wobei die nicht gekochten Teigwaren der Stufe (a), bezogen auf das Geicht der nicht gekochten Teigwaren, zwischen 0,005 und 0,2 Gew.-% eines Sulfhydryl-Reduktionsmittels enthalten.

**22.** Verfahren nach den Ansprüchen 20 oder 21, wobei die ungekochten Teigwaren vor der Einweichstufe (a) 3 bis 12 Monate gelagert worden sind.

**23.** Verfahren nach den Ansprüchen 1 bis 22, wobei die nicht gekochten Teigwaren vor der Einweichstufe (a) Temperaturen von mindestens 180°F (82,2°C) ausgesetzt worden sind.

**24.** Verfahren nach den Ansprüchen 20 bis 22, wobei die nicht gekochten Teigwaren vor der Einweichstufe (a) Temperaturen von mindestens 165°F (73,9°C) ausgesetzt worden sind.

**25.** Verfahren nach Anspruch 23 oder Anspruch 24, wobei die Temperaturen erzeugt werden durch eine Quelle, ausgewählt aus der Gruppe bestehend aus einem Trockner, einer erhitzten Trommel, einem Mikrowellenofen, einem Infrarotofen, einer dielektrischen Heizvorrichtung und überhitztem Dampf.

**26.** Verfahren nach Anspruch 23 oder Anspruch 24, wobei die Temperaturen von einem Trockner erzeugt werden.

**Revendications**

**1.** Procédé pour cuire rapidement des pâtes alimentaires, comprenant les étapes suivantes :
(a) faire tremper des pâtes non cuites dans de l'eau ayant une température comprise entre 0,6°C (33°F) et 60°C (140°F) pendant une durée suffisante pour hydrater les pâtes; et
(b) cuire les pâtes imbibées obtenues à l'étape (a) en chauffant pendant une durée plus courte que celle qui serait nécessaire pour cuire des pâtes que l'on n'aurait pas préalablement fait tremper,
dans lequel la perte d'amidon des pâtes cuites résultant de l'étape (b) est inférieure à 7% en poids, sur la base du poids des pâtes non cuites.

**2.** Procédé selon la revendication 1, dans lequel la durée de cuisson à l'étape (b) est comprise entre 1 et 2 minutes.

**3.** Procédé selon l'une des revendications 1 ou 2, dans lequel l'étape de cuisson (b) s'effectue par chauffage microondes.

**4.** Procédé selon l'une des revendications 1 ou 2, dans lequel l'étape de cuisson (b) s'effectue par immersion dans l'eau bouillante.

**5.** Procédé selon les revendications 1 à 4, dans lequel l'étape de trempage (a) s'effectue à une température comprise entre 4,4°C (40°F) et 10°C (50°F).

**6.** Procédé selon la revendication 5, dans lequel la durée de cette étape de trempage (a) est comprise entre 4 et 12 heures.

**7.** Procédé selon les revendications 1 à 6, dans lequel on fait tremper les pâtes non cuites dans l'étape (a) sous la forme d'une portion individuelle.

**8.** Procédé selon la revendication 7, dans lequel le poids de cette portion est compris entre 85,2 g (3 onces) et 113,6 g (4 onces).

**9.** Procédé selon l'une des revendications 7 ou 8, dans lequel ladite portion est emballée dans un récipient perméable à l'eau et résistant à l'eau bouillante.

**10.** Procédé selon la revendication 9, dans lequel le récipient est un sac plastique perforé.

**11.** Procédé selon la revendication 10, dans lequel ledit récipient est un sac de polyéthylène perforé.

12. Procédé selon les revendications 1 à 11, dans lequel les pâtes alimentaires de l'étape (a) sont choisies dans le groupe comprenant les suivantes : spaghetti, linguini, coudes, tortillons, coquilles, conchiglioni, ziti, vermicelle, fusilli, fettucine, tortellini, ravioli, manicotti, lasagnes, rote, tortiglioni et leurs mélanges.

13. Procédé selon les revendications 1 à 12, dans lequel les pâtes cuites obtenues à l'étape (b) conservent une couleur dorée naturelle.

14. Procédé selon les revendications 1 à 13, dans lequel les pâtes non cuites sont préparées avec addition de vitamines et dans lequel 50% au moins des vitamines présentes dans les pâtes non cuites subsistent dans lesdites pâtes après l'étape de cuisson (b).

15. Procédé selon les revendications 1 à 14, dans lequel les pâtes non cuites de l'étape (a) comprennent, sur la base du poids des pâtes non cuites,
    (i) entre 67,0% et 80,0% en poids de fleur de semoule ayant une teneur en humidité comprise entre 11 et 14% en poids,
    (ii) entre 0 et 2% en poids de monostéarate de glycérol,
    (iii) entre 0 et 3% en poids d'une substance protéinée qui coagule à des températures égales ou supérieures à 60°C (140°F),
    (iv) entre 0 et 0,2% en poids d'un agent réducteur des groupes sulfhydryles, et
    (v) de l'eau pour le reste.

16. Procédé selon la revendication 15, dans lequel la substance protéinée (iii) est choisie dans le groupe comprenant les suivantes : albumine, oeuf entier, blanc d'oeuf, jaune d'oeuf, concentré de protéines du petit-lait et leurs mélanges.

17. Procédé selon la revendication 15, dans lequel ladite substance protéinée (iii) est le blanc d'oeuf.

18. Procédé selon les revendications 15 à 17, dans lequel l'agent réducteur des groupes sulfhydryles (iv) est choisi dans le groupe comprenant les suivants : métabisulfite de sodium, cystéine, sels de cystéine solubles dans l'eau, glutathione, et leurs mélanges.

19. Procédé selon les revendications 15 à 17, dans lequel ledit agent réducteur des groupes sulfhydryles (iv) est le chlorure de L-cystéine.

20. Procédé selon les revendications 15 à 19, dans lequel les pâtes non cuites de l'étape (a) comprennent, sur la base du poids de ces pâtes non cuites, entre 0,5 et 3 % en poids de la substance protéinée.

21. Procédé selon les revendications 15 à 20, dans lequel les pâtes non cuites de l'étape (a) comprennent, sur la base du poids de ces pâtes non cuites, entre 0,005 et 0,2% en poids de l'agent réducteur des groupes sulfhydryles.

22. Procédé selon l'une des revendications 20 ou 21, dans lequel, avant l'étape de trempage (a), on fait vieillir les pâtes non cuites pendant 3 à 12 mois.

23. Procédé selon les revendications 1 à 22, dans lequel, avant l'étape de trempage (a), on soumet les pâtes non cuites à des températures au moins égales à 82,2°C (180°F).

24. Procédé selon les revendications 20 à 22, dans lequel, avant l'étape de trempage (a), on soumet les pâtes non cuites à des températures au moins égales à 73,9°C (165°F).

25. Procédé selon l'une des revendications 23 ou 24, dans lequel ces températures sont obtenues par une source choisie parmi les suivantes : étuve, tambour chauffant, four microondes, tunnel infrarouges, dispositif chauffant diélectrique et vapeur surchauffée.

26. Procédé selon l'une des revendications 23 ou 24, dans lequel ces températures sont obtenues par une étuve.